# EUROPEAN PATENT APPLICATION

(11) **EP 1 528 835 A1**
(43) Date of publication of application: **04.05.2005**
(21) Application number: 03256929.5
(22) Date of filing: 31.10.2003
(51) Int. Cl.: H04Q 11/04, H04M 11/06

(54) **Switch for maintaining voice communications while testing DSL networks**

(71) Applicant: United Technologists Europe Limited, Ipswich IP7 6BG (GB)
(72) Inventor: Grafton, Paul Alexander, Ware, Hertfordshire SG1Z 0AA (GB)
(74) Representative: Walder, Jeremy Thomas

(57) **Abstract**

The invention provides an device that enables improved methods for testing DSL networks. By inserting a suitable low-pass filter in parallel with the network, it is possible to retain voice communication whilst testing for broadband connectivity.

## Description

The present invention relates to a switch, and in particular to a test access switch for use in telephony networks supporting broadband services.

Public switched telephone networks (PSTNs) were developed to carry narrowband voice signals, with the signals being routed by switching centres. These narrowband signals were typically limited in frequency to less than 4 kHz. In recent years there has been a trend to transmit high bit-rate data signals in parallel with the voice signals, for example using DSL (Digital Subscriber Line) technology. In such systems the telephony and data signals will be combined together at the local exchange or switching centre to be transmitted to the customer. The voice signal occupies the lower frequency band (typically up 4kHz) whilst the data signal occupies the higher frequency bands (up to 100s of kHz or even MHz), with a guard band to prevent the voice signals from interfering with the data signals (and *vice versa*).

As the network infrastructure was only designed to carry low frequency signals, it is necessary to test that a particular circuit is capable of supporting the high bit-rate data. Furthermore, as the attenuation of some of the frequency bands may vary with time, some DSL systems are adaptive and will change the frequency bands that are used for transmission. Operation of DSL systems is relatively complex and thus it is necessary to utilise test equipment that, in the event of a fault, can locate the fault and its location, that is, is the fault in the exchange cabling, the transmission equipment, the network cabling, the ISP's equipment or the customer equipment. The customer's line must be broken using a test access switch to allow the connection of specialist test equipment which prevents the line from carrying telephony signals as well as data signals.

According to a first aspect of the invention there is provided a communications network comprising: first transmission means and second transmission means, the first transmission means being connected to the second transmission means by a transmission medium; switching means co-located with the first transmission means and connected to the transmission medium intermediate the first transmission means and the second transmission means; the network being characterised in that the network further comprises a filter element, the filter element being connected in parallel to the transmission medium. Preferably the communications network further comprises one or more test means, the one or more test means being connected to the switching means. The network may, in use, transmit signals in a first frequency band and signals in a second frequency band and the filter element may be configured to substantially reject the signals in the first frequency band. The filter element may also be configured to pass the signals in the second frequency band substantially unaffected. The signals in the first frequency band may comprise high frequency data signals and the signals in the second frequency band may comprise low frequency voice signals. The data signals may have a frequency greater than substantially 4kHz and the voice signals may have a frequency less than substantially 4kHz.

The filter element may be installed in parallel with the switching means or the switching means may comprise the filter element. Alternatively, the one or more test means may comprise the filter element. In a further alternative, filter element may be connected in parallel with the connection between the one or more test means and the switching means.

The invention will now be described, by way of example only, with reference to the following Figures in which:
Figure 1 shows a schematic depiction of a telephone network;
Figure 2 shows a schematic depiction of the telephone network shown in Figure 1 when the network is under test;
Figure 3 shows a schematic depiction of a telephone network incorporating the present invention;
Figure 4 shows the network of Figure 3 when the network is under test;
Figure 5 shows a schematic depiction of a further embodiment of a telephone network incorporating the present invention; and
Figures 6 & 7 show a schematic depiction of further embodiments of a telephone network incorporating the present invention

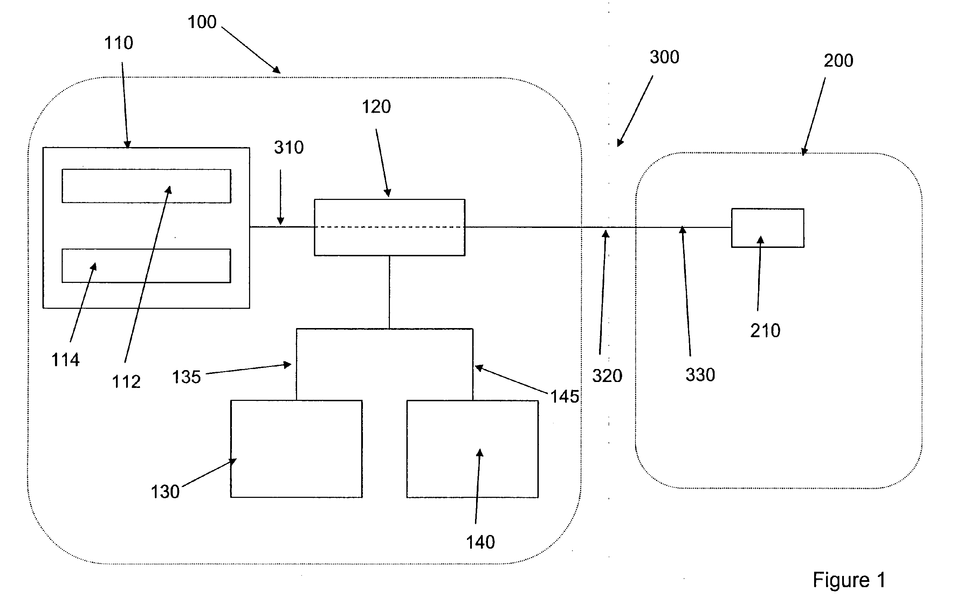

Figure 1 shows a schematic depiction of a telephone network. The network comprises exchange premises 100 customer premises 200 and network cable 300, with the exchange premises being connected to the customer premises by the network cable 300. The exchange premises comprises transmission equipment 110, test switch 120, first test apparatus 130 and second test apparatus 140. The transmission equipment 110 comprises voice transmission equipment 112 and data transmission equipment 114, both of which are coupled to internal cabling 310. The first test apparatus is connected to the test module via first test connector 135 and the second test apparatus 140 is connected to the test switch via the second test connector 145.

The internal cabling 310 connects the transmission equipment 110 to the test switch 120 and is also connected to the external network cable 320. The external network cable 320 connects the exchange premises with the customer premises. Within the customer premises the customer premises cabling 330 is connected to the customer premises equipment 210.

In use, voice signals from the voice transmission equipment 112 and data signals from the data transmission equipment 114 are combined onto the internal cabling and transmitted to the external network cable via the test switch. The test switch is configured to allow the signals to pass through such that both the voice signals and the data signals are transmitted over the external network cable to the customer premises where the signals are received by the customer premises equipment. The customer premises equipment will separate the voice signals from the data signals so that the voice signals can be routed to a telephone and/or fax machine and the data signals can be routed to a PC or a LAN.

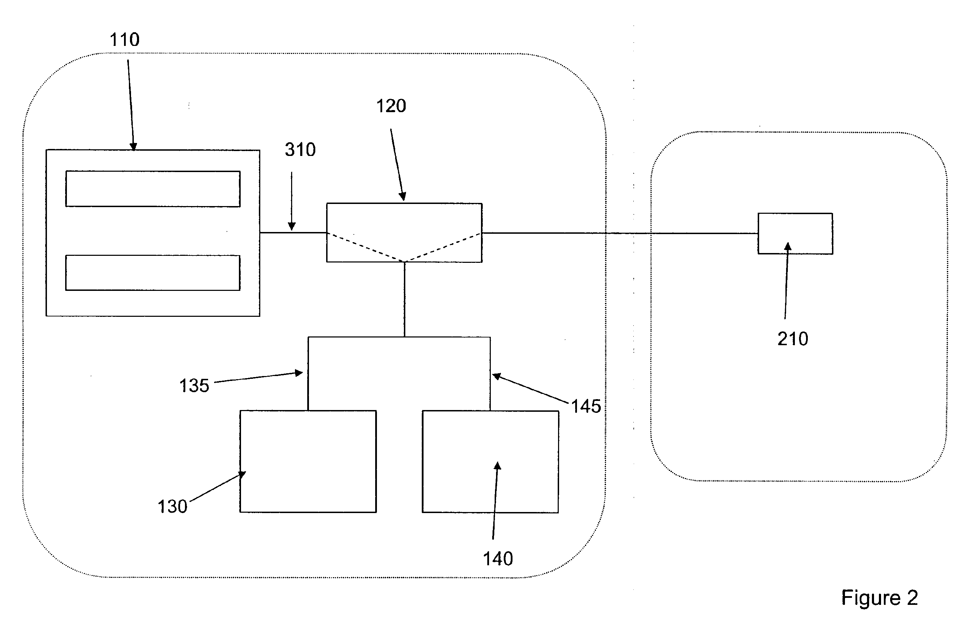

Figure 2 shows a schematic depiction of the telephone network shown in Figure 1 when the network is under test. The test switch breaks the network between the transmission equipment and the customer premises equipment such that the signals transmitted by the transmission equipment are routed to the first test apparatus via the internal cabling. Similarly, the customer premises equipment is linked to the second test apparatus via the customer premises cabling and the external network cable. When the test switch is in test mode, the first test apparatus can emulate the signals that would be sent from a customer's broadband modem to the ISP equipment to determine whether the fault is with the ISP equipment or the intermediate transmission equipment. This test apparatus attempts to communicate with the customer's broadband modem to assess its status and the status of the customer's computer equipment. If the second test apparatus is unable to communicate with the customer's broadband modem then a line test is performed in order check for a fault in the network cable. The customer's POTS telephony service is broken for the duration of the test.

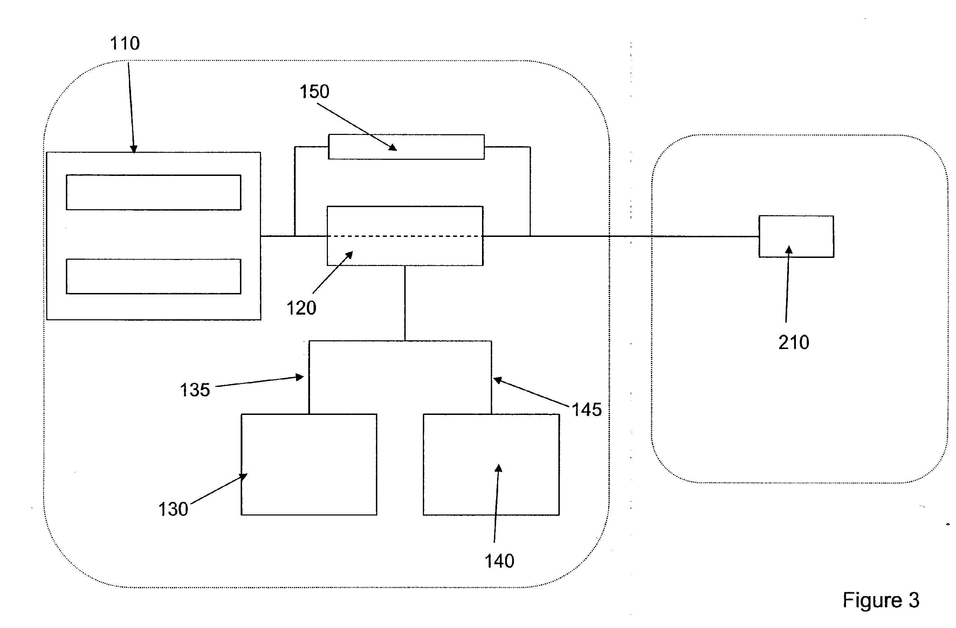

Figure 3 shows a schematic depiction of a telephone network incorporating the present invention. The network further comprises a filter element 150 that is connected in parallel to the test module. The filter element is a low-pass filter that is designed to pass through low frequency voice signals significantly unattenuated whilst providing significant attenuation to the higher frequencies used to transmit the data signals.

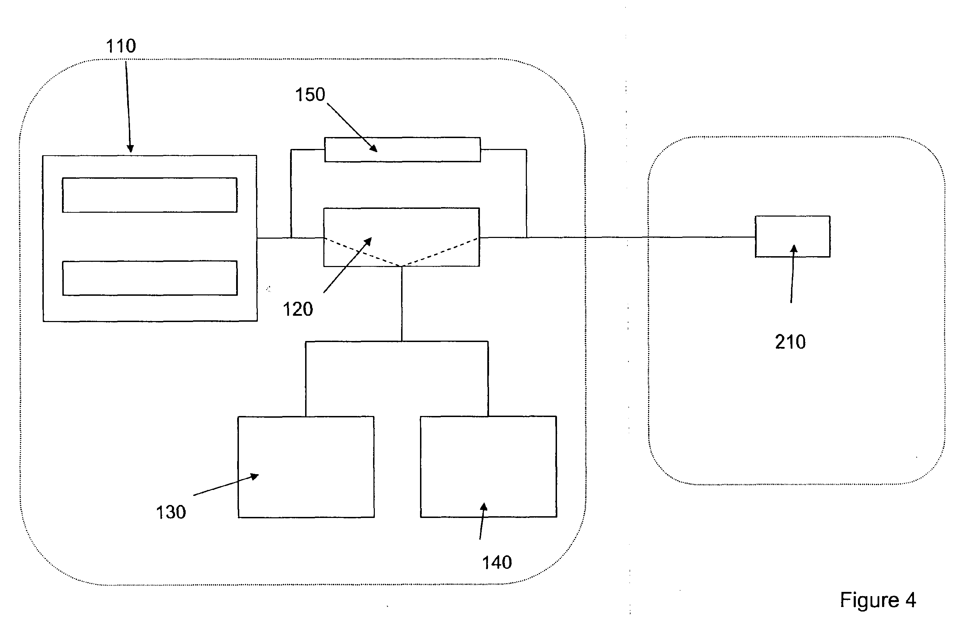

Figure 4 shows the network of Figure 3 when the network is under test. The test switch routes the signals from the transmission equipment to the first test apparatus and from the external network cable to the second test apparatus. The filter element 150 provides an additional route for the voice signal to be transmitted from the voice transmission equipment to the customer premises equipment so that voice signals may still be transmitted whilst the data capacity of the network link is being tested. This allows support and maintenance staff to communicate with a customer whilst a fault is being located and/or diagnosed. Once the testing is complete then the test switch will route the signals from the transmission equipment to the external network cable so that both voice and data signals can be transmitted over the network.

When a customer rings a support line to report a fault, the customer will be routed to the appropriate support line, typically by the customer selecting options from a menu or via automatic voice recognition systems. Once the fault report option has been selected, support systems can cause the test modules to perform their test routine such that some or all of the test results will be available to the support line operator when they are connected to the customer. Without the present invention, the support line operator has to take some details from the customer, terminate the call, carry out the line tests and then attempt to re-establish communications with the customer.

Clearly, some network faults, such as the severing of the external network cable will prevent transmission of all signals, but in the event that that only the capacity to send high frequency signals is degraded or effected then it will still be possible to transmit voice signals.

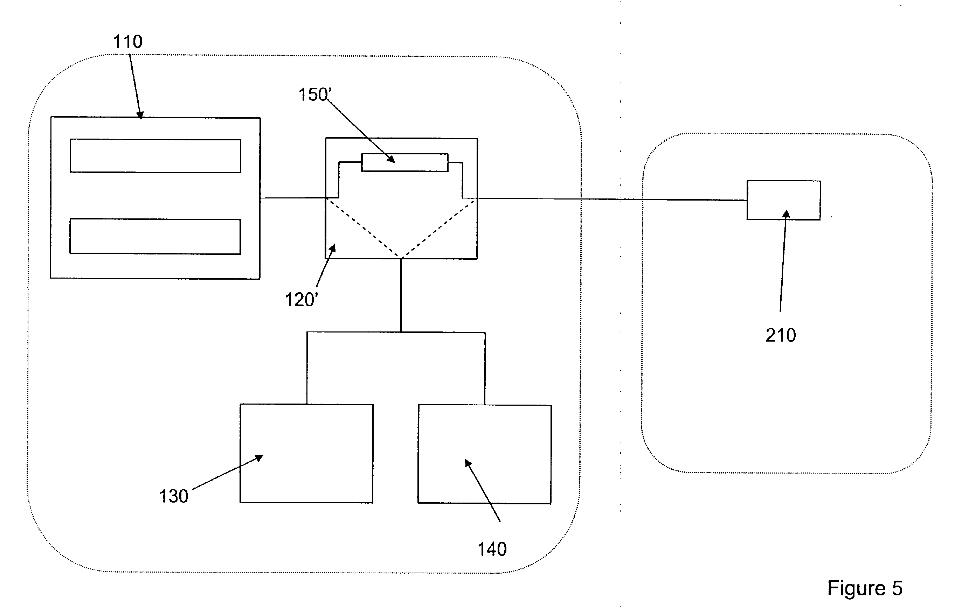

Figure 5 shows a schematic depiction of a further embodiment of a telephone network incorporating the present invention. Figure 5 shows a test switch 120' that comprises a filtering element 150'. The test switch 120' and the filtering element 150' function as described above in order to allow the network to be tested whilst still transmitting voice signals.

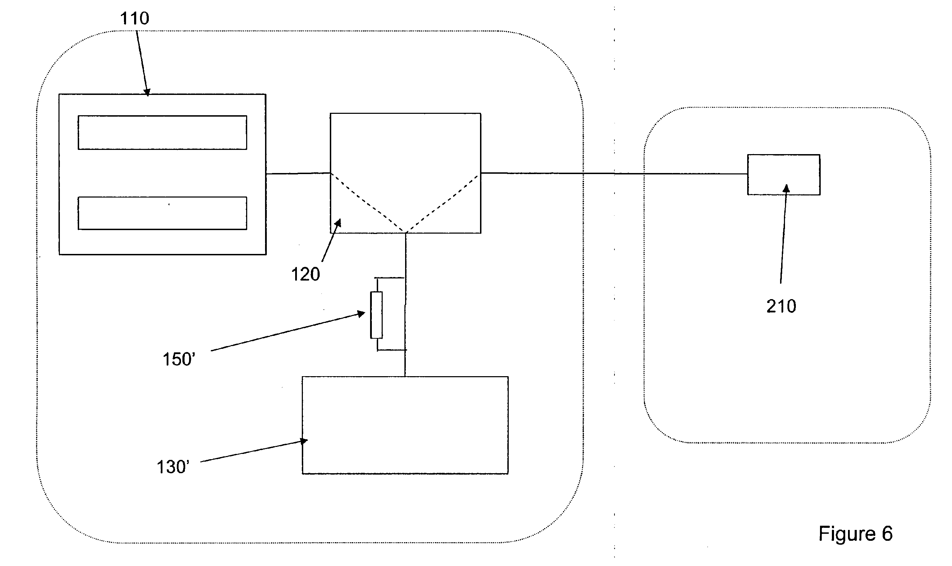

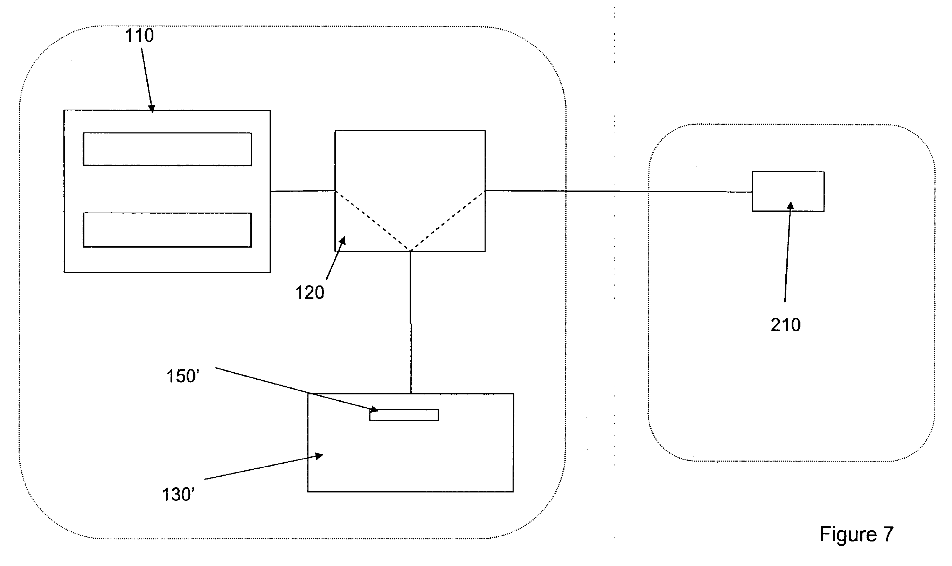

Figure 6 shows a schematic depiction of a further embodiment of the present invention, in which the first and second test apparatus 130, 140 are replaced with an integrated test apparatus 130' which can perform both the upstream and the downstream testing. Figure 6 also shows that the filter element 150' can be installed in parallel to the internal cabling that connects the integrated test apparatus 130' to the test switch 120. Figure 7 shows a schematic depiction of a further embodiment of the present invention, showing the same configuration as shown in Figure 6, except that the filter element 150' is now disposed within the integrated test apparatus 130'. It will be readily understood that the_location of the filter element 150, 150' is not essential, as long as the filter element is connected in parallel such that there is a second transmission path for the voice signals when the network is placed under test.

The filter elements 150, 150' are designed to pass the voice signals and block the higher frequency broadband signals. The filter may be either passive or active and is a high order filter having a cut-off frequency of 4 kHz, a very sharp cut-off characteristic with very high attenuation (≥40dB) above the cut-off frequency. It will be understood that the implementation of the present invention does not depend upon the specific design of the filter.

## Claims

1. A communications network comprising:
first transmission means (110) and second transmission means (210), the first transmission means being connected to the second transmission means by a transmission medium (300);
switching means (120) co-located with the first transmission means and connected to the transmission medium intermediate the first transmission means and the second transmission means;
the network being **characterised in that** the network further comprises a filter element (150), the filter element being connected in parallel to the transmission medium.

2. A communications network according to claim 1, wherein the communications network further comprises one or more test means, the one or more test means being connected to the switching means.

3. A communications network according to claim 1 or claim 2, wherein the network, in use, transmits signals in a first frequency band and signals in a second frequency band and the filter element is configured to substantially reject the signals in the first frequency band.

4. A communications network according to claim 3 wherein the filter element is configured to pass the signals in the second frequency band substantially unaffected.

5. A communications network according to claim 2 or claim 4, wherein the signals in the first frequency band comprise high frequency data signals.

6. A communications network according to any of claims 3 to 5, wherein the signals in the second frequency band comprise low frequency voice signals.

7. A communications network according to claim 5 wherein the data signals have a frequency greater than substantially 4kHz.

8. A communications network according to claim 6 wherein the voice signals have a frequency less than substantially 4kHz.

9. A communications network according to any preceding claim wherein the filter element is installed in parallel with the switching means.

10. A communications network according to claims 9, wherein the switching means comprises the filter element.

11. A communications network according to any of claims 2 to 8, wherein the one or more test means comprise the filter element.

12. A communications network according to any of claims 2 to 8, wherein the filter element is connected in parallel with the connection between the one or more test means and the switching means.
